# EUROPEAN PATENT APPLICATION

(11) **EP 1 237 365 A1**
(43) Date of publication of application: **04.09.2002**
(21) Application number: 02004192.7
(22) Date of filing: 26.02.2002
(51) Int. Cl.: H04N 5/445, G06F 9/44

(54) **Representation of EPG programming information**

(30) Priority: 27.02.2001 GB 0104781
(71) Applicant: Pace Micro Technology PLC, Saltaire, Shipley, BD14 3LF (GB)
(72) Inventor: Dommer, Gary, Pompano Beach, Florida 33062 (US); Rorholt, Anders, Suite 200, Bocaraton, Florida 33431 (US)
(74) Representative: Wood, Graham

(57) **Abstract**

The invention relates to the generation of an improved graphics interface which is interactive and allows the user navigation. The interface represents portions of data from a number of fields of data, said fields representing programme information for current and future television programmes which can be viewed. The interface includes a first display portion which represents a portion of one data field and a second display portion which represents a series of said fields, both of said display portions navigable by the user to make selections from the display portions.

## Description

The invention relates to the representation of information visually and particularly, although not necessarily exclusively, the provision of information in the form of programming information such as that provided as part of an Electronic Programme Guide (EPG). The invention relates to the format of the EPG display and particularly the provision of additional user selectable functions and applications, which can be made from the display. Although the invention is described with reference to the EPG this does not and should not be interpreted as, limiting the scope of the invention.

An EPG is generated as a graphic interface on a display screen and is generated by a broadcast data receiver from data broadcast by and received from one or a number of service providers. The EPG can show a range of programme or function related information at least some portions of which can be selected by the user to obtain further information or to perform certain functions. The user typically navigates through the EPG by making a series of selections via appropriate control means, typically a remote control device. The use of the device and interaction with the broadcast data receiver (BDR) allows movement about the screen and through different display layers.

In this description the term "a level of choice" is used to refer to a menu option which is accessible by the user through navigation in the graphic user interface, "a level of select" is used to define the press of an action key on a control means such as a remote control device that executes the choice. A "user input device" is any control means provided to the user for control of the BDR, most commonly a remote control unit or the front panel keys, and "navigation keys" are the directional keys on the user input device; such as Up, Down, Left, Right, Page up, Page down.

A conventional EPG presents the programming info with two levels of user choice in a two dimensional space. (Time versus Channel, Channel versus Time, Theme versus Channel, etc). Normally the choices are mapped to x and y co-ordinates in a grid function on the screen and to the navigation buttons on the user input device.

A change in x-coordinate, performed by operation of (left/right arrows) changes the user's choices in the y direction. Movement in the y direction (up/down arrows, page up/down) chooses a selectable program. This gives the user two levels of choice with one level of selection. The two dimensional grid with rows and columns, is one particular embodiment of this.

While this system allows beneficial and effective use of the two dimensional space, a limitation of this approach is the two dimensional graphic interface and the limited number of navigational keys on the user input device which can be used. When the user wants another view, he/she has to press another "menu-mapped" button on the remote control. There are two known methods to perform this function, which are either to have remote control keys mapped directly to different pages of the EPG, such that depression of a particular key causes the generation of a particular EPG display and/or to have one button bring up a menu/list of all available menus of the EPG. In the latter of these opinions there is a need for an additional level of user selection before the desired list of choices is shown.

In the present invention, this is accomplished by pressing the Page +/- button. Each time the Page button is pressed, the highlighted Tab will become the Tab above (Page+) or below (Page -) the currently highlighted Tab. The Page +/- button will move one through the defined graphical tabs. With the movement onto each tab the associated function, data or application becomes active. This movement onto a tab will activate the associated function, data or application and in doing will provide additional x/y/z choices as per the newly activated function, data or application. The second display presents the information which is in the z axis, and this information is the new function, data, or application to which the Tab is connected. This connection is performed with a software program that is activated through the Page button and works with a list of software functions, data sets, or applications.

The aim of the present invention is to overcome the limitations of the two dimensional interface of the conventional EPG display to facilitate improved use of the EPG.

In a first aspect of the invention there is provided an interactive graphics interface for display on a television screen, said graphics interface generated from a plurality of data fields and characterised in that the graphics interface has at least three navigational axes, comprising a first display which displays a portion of one of the data fields and allows user navigation along X and Y axis of the same and a second display portion which represents a number of functions, applications or data fields and effectively allows navigation along the Z axis of said functions, applications or data fields.

Preferably the second display portion is in the form of a graphical icon which represents a number of said resident or server based functions, applications, or data fields.

In one embodiment the first and second display portions are generated as an electronic programme guide (EPG) on a display screen.

Typically navigation along the second display portion allows the selection of the data field from which the first display is generated.

In one embodiment each of the three axes are selectively navigable by the user via a user input device, typically a remote control device.

In use navigation along a selected axis allows a definable range of options to be selected, said option range indicated as part of the EPG display.

By adding a third navigational axis and providing the user with the means to navigate along this axis using existing navigational keys (The Page +/- key presses generate signals that are received by the STB and cause software routines to execute. These routines change the Tab graphics and perform work to activate or load other software functions, data, or applications. These functions, data, or applications can come for the Headend or reside within the Set Top Box. They are associated or mapped to the graphical tab representation through software data structures.) A new range of user options can be selected from the single graphics display, thus eliminating the need for a separate interface to be generated and the need for an additional user selection.

The Headend passes data structures in files over a broadcast data carousel. One of these files contains service IDs that are associated with software functions, data, or applications. Software on the STB creates graphical Tabs to display within the EPG and binds them to these functions, data, or applications.

In one embodiment there is provided a z axis which is allocated to show, and allow selection of additional functions and applications which may then utilize the x axis and y axis navigation within there own context.

By performing the invention so the amount of user choice is increased to three without increasing the select levels required to be performed by the user to select a particular function.

According to a second aspect of the present invention there is provided a method for displaying an interactive graphics interface on a display screen comprising:
receiving data organized in a plurality of data fields wherein the plurality of data fields are related to at least three navigational axis;
displaying in a first display view data organized in a first and a second navigational axis; and
displaying in a second display view data organized in a third navigational axis, wherein the data organized in the third navigational axis is related to data organized in the first and the second navigational axis.

According to a further aspect of the present invention there is provided a method for displaying an interactive graphics interface on a display screen comprising receiving data relating to X and Y axis information for displaying on the display screen; receiving data relating to Z axis information for displaying on the display screen;
displaying in a first display view within the display screen data relating to X and Y axis information; and
displaying in a second display view within the display screen data relating to the Z axis information, wherein the data relating to the Z axis information is related to the data relating to the X and/or Y axis information.

According to a yet further aspect of the present invention there is provided a method for preparing data for displaying the data as an interactive graphics interface having X, Y, and Z axis information on a display screen comprising receiving data related to the X, Y, and Z information; parsing the data related to the X, Y, and Z information;
associating indexes with the data relating to the X, Y, and Z information; and mapping the indexes to the data relating to the X, Y, and Z information which is presented as choices in the X, Y, and Z axis.

Specific embodiments of the invention are now described with reference to the accompanying drawings wherein:-
Figure 1 illustrates in schematic fashion a conventional, prior art, display format;
Figures 2 and 3 illustrate stages of the current invention involving the use of navigation axes;
Figure 4 illustrates the expansion of a conventional EPG decision tree in accordance with the invention; and
Figure 5 shows an on-screen view of an EPG in accordance with one embodiment of the invention.

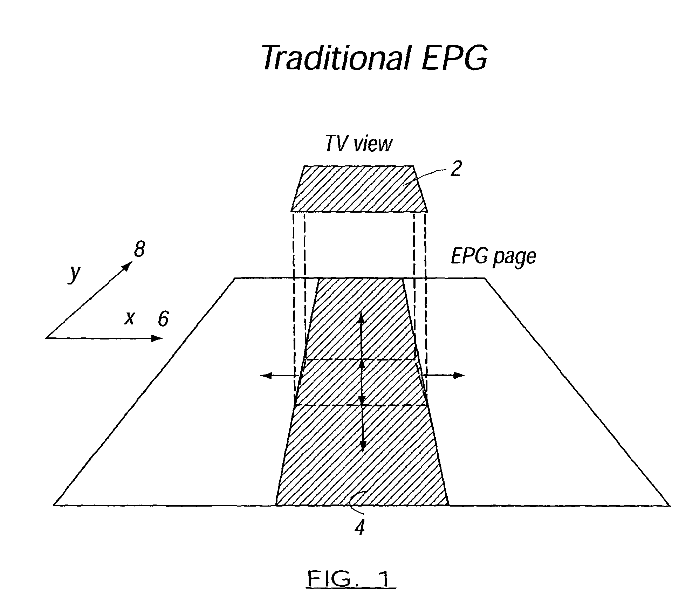

Referring firstly to Figure 1, there is illustrated the conventional approach to the format of an EPG display. In practice the screen view 2 is a part of a larger EPG graphics display page of information 4. When the user wishes to view another portion of the page, the directional keys move the view area 2 around on the page 4 as required by the user, in the x and y axis, 6, 8.

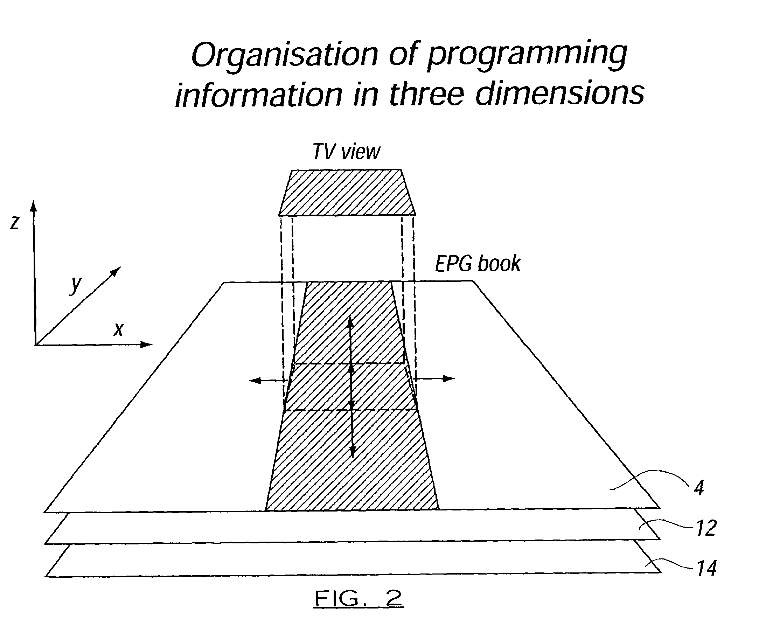

Now looking at the invention of this application, a third axis 10, is provided and this is used to extend the EPG information which can be selected into three dimensions. This is achieved by the decision to stack multiple data fields or pages 4, 12, 14, as shown in figure 2. Movement on page 4 remains mapped to movement along the x- and y-axes, but there is now the additional option of movement between pages 4, 12, 14 and which movement is mapped to movement along the z-axis.

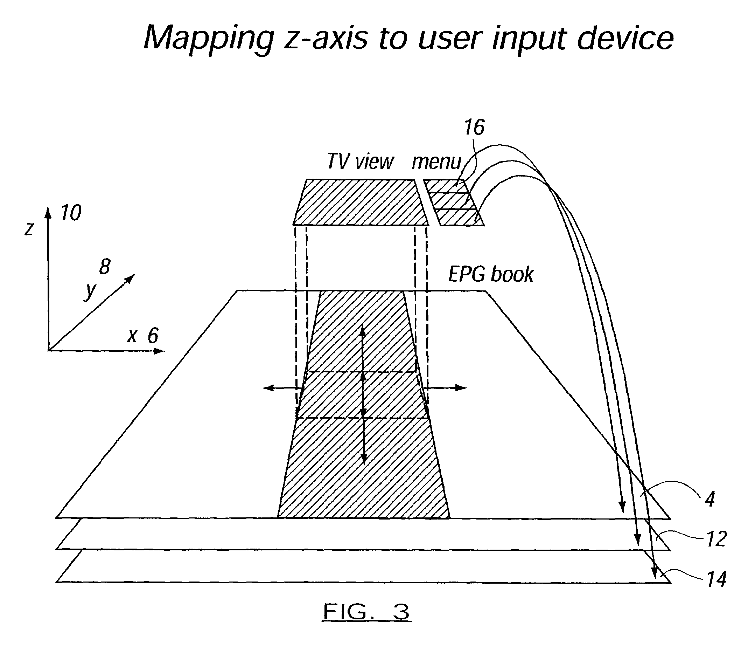

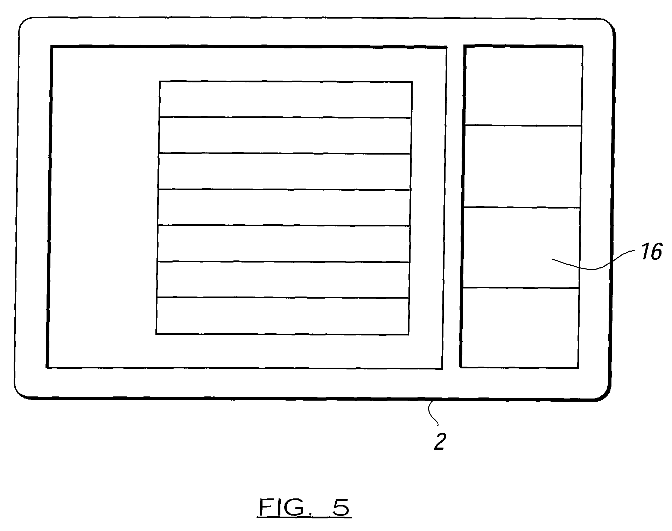

The visual representation of the z-axis can be added as a second display portion as an independent view of a row or column of choices (menu bar) 16, as indicated in Figure 3, as part of the display screen view and as shown in more detail in Figure 5. The movement in the z direction is indicated by movement of a cursor along the member 16.

To avoid the need for additional select levels, a separate set of keys can be mapped or re-mapped to control and provide movement options along the z-axis. The Z axis navigation only requires one key press. All other EPGs require that one navigates to the 'next' z axis item and then press a select key to invoke the new item (where "item" is either software functions, data, or applications).

Movement in the z-direction changes the view of choices in the first display portion, x-y plane, and movement in the x-direction changes the choices in the y-direction. As in a conventional EPG implementation, the lowest level of choice, choice of a specific program, is in the y direction.

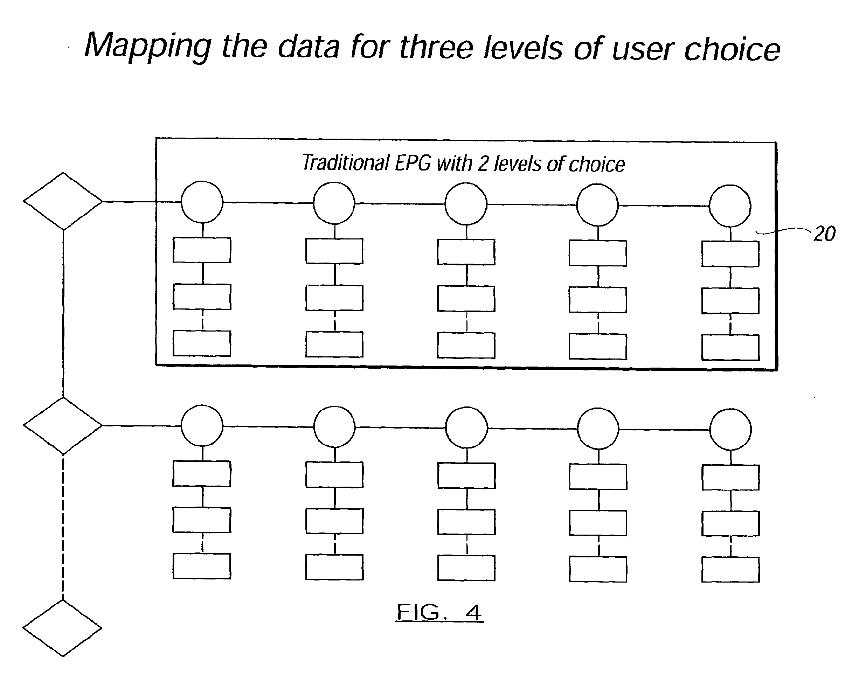

The organisation of choices and data in a traditional EPG can be represented as a 2 level decision tree 20 as shown in Figure 4. A third layer of decision requires an additional level 22 in the tree as shown in figure 4. In this example, in an EPG, the chosen object will always be a channel. The objects of choice can be presented to the user in any graphic form (line, row, image, etc).

By indexing the EPG programming information rather than sorting, there is never a need to reorganise the information. If desired, the programming information can be stored in a flat unsorted array and the data is parsed and indexed as it comes in. The indexes are in turn mapped to the choices along the x-, y-and z-axes 6, 8, 10 respectively. Indexing rather than sorting decreases the necessity of resorting or having multiple copies of the same data.

The representation of programming information in accordance with the invention eliminates the need for mapping remote control buttons to the user configurable keys. These keys can then be ignored, or removed, thus simplifying the remote control, or are used to allow access to other broadband services such as yellow pages, shopping, communication and/or the like.

For other graphics interfaces such as those used, for example, for broadband services the 3 layers of choice can be used to give the user faster access to the desired object within that service, and it should be appreciated that reference in this application to the display and utilisation of the invention can be repeated to advantage in any appropriate graphic user interface.

A specific example of the invention is described where an Electronic Programme Guide is visually represented as an almanac with a tab for each page, as indicated in Fig. 3. The tabs are placed vertically on the right hand side of the display and indicate motion and choices in the z-direction. The movement between pages is mapped to the page up and page down buttons on the user interface device. The arrow keys (left, right, up, down) are mapped to motion in the x-y plane as in a conventional EPG. In order to maintain the ability to scroll faster on a page, the action of continuous hold is mapped to an arrow button to fast scrolling. This replaces the need for using page up and page down for manoeuvring in the x-y plane.

All programming data is presented as lines in a column where motion in the x-direction changes the content of the column and motion in the y direction moves the cursor up and down between available programs.

In the mapping of the EPG data to the three dimensional space the axes are mapped in the following manner:

| | |
|---|---|
| Z = Page | = Sorting method/programme type |
| Y = Column | = Sort index |
| X = Line | = Programme |

The settings function can also be adapted so that, for example, for another form of graphics interface such as a display for service access and payment facilities with three layers of choice, the x, y and z co-ordinates can be mapped in the following way:

| | |
|---|---|
| Z = Page | = Settings functions (Payment, output, parental control, and/or the like) |
| Y = Column | = Setting (Method of payment) |
| X = Line | = Options for setting (credit card, direct withdrawal, bill me) |

In the present invention, by mapping a third pair of keys the user can manoeuvre freely in the three dimensions without pressing a select key. Typically in a menu one navigates in a x-y plane. To attain a third level of choice, one has to perform a select action that brings one a level down the selection tree. Then to get back to, or change, the current top level, one has to traverse back up the tree by a select action before another top level choice can be made.

In the present invention, one can navigate all three levels without traversing back. For example, page up/down command will always switch top level, while the left arrow navigates the second level and the up/down command controls the third level.

The subject invention is not limited to navigating a 3 dimensional tree, but can be expanded to 'n' dimensions depending on the branches in the incoming data structure and the number of keys available on the navigation device (remote control) to map to navigation along each of the 'n' axes.

In one embodiment of the present invention, a four level navigation is provided in which the Page up/down control brings one up/down in the top level; the Line up/down control brings one up/down in the second level presented as a left column of grouped data; and from the left hand menu one can press the Select command that brings one to the third level of navigation (This also changes the up/down arrow command to navigate in the fourth dimension).

The data either resides on the set top box or comes to the box in table form.

The EPG uses standard service protocol tables where a table or a portion of the table is mapped to a tab, with the sorting of the table to column headers, the table entries to column lines, and descriptors to fields in the view (the channel descriptor in the upper left with program descriptor below, and with the full program information descriptor to an information overlay that is activated by the information key). Individual tabs can be mapped to service tables or portions of service tables. The content and/or application can reside on the set top box, on the head end, an application server, a web server (html), internet, or anywhere where the set top box can communicate. Examples include MOD as an embedded resident application mapped to a tab, and the music tab mapped to a specific url within the standard protocol.

## Claims

1. An interactive graphics interface for display on a television screen, said graphics interface generated from a plurality of data fields and **characterised in that** the graphics interface has at least three navigational axes (6, 8, 10), comprising a first display which displays a portion of one of the data fields and allows user navigation along X and Y axis (6, 8) of the same and a second display portion which represents a number of functions, applications, or data fields and effectively allows navigation along the Z axis (10) of said functions, applications or data fields.

2. An interface according to claim 1 **characterised in that** the first and second display portions are generated as an electronic programme guide (EPG) on a display screen.

3. An interface according to claim 1 **characterised in that** the navigation along the second display portion allows the selection of the data field from which the first display is generated.

4. An interface according to claim 1 **characterised in that** each of the three axes (6, 8, 10) are selectively navigable by the user via a user input device.

5. An interface according to claim 4 **characterised in that** the input device is a remote control device.

6. An interface according to claim 1 **characterised in that** navigation along a selected axis allows a definable range of options to be selected, said option range indicated as part of the EPG display.

7. An interface according to claim 5 **characterised in that** navigation along each of the axes (6, 8, 10) can be achieved by use of conventional key selections on the remote control device.

8. A method for displaying an interactive graphics interface on a display screen comprising:
receiving data organized in a plurality of data fields wherein the plurality of data fields are related to at least three navigational axis (6, 8, 10);
displaying in a first display view data organized in a first and a second navigational axis; and
displaying in a second display view data organized in a third navigational axis, wherein the data organized in the third navigational axis is related to data organized in the first and the second navigational axis.

9. The method of claim 8 **characterised in that** the first display view is visually represented as an almanac with at least one tab related to at least one page in the Z axis (10).

10. The method of claim 9 **characterised in that** the method further comprises the steps of receiving an input from a user selecting at least one tab; and indicating in the second display view motions and choices in a direction of the Z axis (10).

11. The method of claim 8 **characterised in that** the first display view and the second display view are generated as an electronic programme guide (EPG) on the display screen.

12. The method of claim 8 **characterised in that** the method further comprises the steps of navigating along data organized in the second display view; and selecting the data organized in the third navigational axis which is related to the data organized in the first and/or second navigational axis.

13. A method for displaying an interactive graphics interface on a display screen comprising receiving data relating to X and Y axis (6, 8) information for displaying on the display screen; receiving data relating to Z axis (z) information for displaying on the display screen;
displaying in a first display view within the display screen data relating to X and Y axis (6, 8) information; and
displaying in a second display view within the display screen data relating to the Z axis (10) information, wherein the data relating to the Z axis information is related to the data relating to the X and/or Y axis information.

14. The method of claim 13 **characterised in that** the data relating to the Z axis (10) information is allocated to show and allow selection of a range of viewing options for the data relating to the X and/or Y axis (6, 8) information.

15. The method of claim 13 **characterised in that** the method further comprises receiving commands from a user to navigate within the data relating to the X and/or Y axis (6, 8) information and the data relating to the Z axis (10) information; and mapping movement along the data relating to the Z axis information to movement in the data relating to the X and/or Y axis information.

16. The method of claim 13 **characterised in that** the method further comprises receiving commands from a user to navigate in a direction through data relating to the Z axis (10) information which results in changing the choices in the first display view.

17. The method of claim 13 **characterised in that** the first display view and the second display view is generated as an electronic programme guide (EPG) on the display screen.

18. The method of claim 13 **characterised in that** the method further comprises navigating along data organized in the second display view; and selecting the data relating to the Z axis (10) information which is related to the data relating to the X and/or Y axis (6, 8) information.

19. A method for preparing data for displaying the data as an interactive graphics interface having X, Y, and Z axis (6, 8, 10) information on a display screen comprising receiving data related to the X, Y, and Z information; parsing the data related to the X, Y, and Z information;
associating indexes with the data relating to the X, Y, and Z information; and mapping the indexes to the data relating to the X, Y, and Z information which is presented as choices in the X, Y, and Z axis.

20. The method of claim 19 **characterised in that** the data relating to the X, Y, and Z axes (6, 8, 10) information represents programming information.

21. The method of claim 19 **characterised in that** the data relating to the X, Y, and Z axes (6, 8, 10) information is received in a flat unsorted array format.
